# EUROPEAN PATENT APPLICATION

(11) **EP 1 262 247 A1**
(43) Date of publication of application: **04.12.2002**
(21) Application number: 01904412.2
(22) Date of filing: 14.02.2001
(51) Int. Cl.: B09B 5/00, B65F 5/00

(54) **SYSTEM FOR MANAGING/TRACING WASTE DISPOSAL STATE**

(30) Priority: 14.02.2000 JP 2000034890
(71) Applicant: Tsukamoto, Hideki, Nakano-ku, Tokyo 165-0034 (JP)
(72) Inventor: Tsukamoto, Hideki, Nakano-ku, Tokyo 165-0034 (JP)
(74) Representative: Dronne, Guy
(86) International application number: JP0101013
(87) International publication number: WO01058609

(57) **Abstract**

A system in which data such as images of waste are recorded and controlled in each of steps of disposal from the collection of the waste to the final disposal thereof and in which whether the waste is being disposed of in a reliable and safe way or not is clearly traced and managed is provided. In steps of disposal from collection of waste 1 to final disposal, data 6 associated with said waste 1 including manifest data, transportation route, current position, time, and analysis of components in each of the steps of disposal are transferred to a data management unit 5 by record-transfer means 4; said waste 1 is imaged with imaging means 2 in each of the steps of disposal; and image data 7 of the waste 1 obtained by the imaging means 2 are transferred to the data management unit 5 by image transfer means 3. The data management unit 5 is accessed by access means 14 to trace/manage the state of disposal of the waste 1 based on the data 6, 7 associated with the waste 1 such as manifest and images.

## Description

### Technical Field

This invention relates to a system for tracing/managing the state of disposal of industrial waste and general waste and, more particularly, it pertains to the technical field of a system in which data on industrial waste such as moving images obtained in each step of disposal are made accessible, and tracing and managing whether the industrial waste is being reliably and safely disposed of or not as occasion demands is performed.

### Background Art

Presently, in order to prevent unrighteous or illegal disposal of industrial waste such as illegal dumping, disposal and control of industrial waste is carried out by using industrial waste management slips consisting of six sheets (hereinafter referred to as "manifest"). A company who discharges waste, a collection/transportation company, a company dealing with intermediate-treatment/final-disposal shall enter predetermined matters in the manifest, which is submitted with signatures and retained.

In steps of disposal from discharge of waste to final disposal, such a manifest is sequentially passed hand to hand by people in charge with the type, quantity, shape, and so on of the industrial waste entered in predetermined columns by hand, accompanied by signatures and seal.

Said manifest system is poor in quickness because an operator must manually fill in, sign, and seal a manifest slip in each step of waste disposal and must forward, keep and submit the manifest slip. Since the contents of waste are judged and managed based on a manifest slip only, the system is regarded problematic in the aspect of reliability in that no actual appearance (real image) of waste that is processed and changed is maintained as data in a visible form. Further, there is a lack of accuracy in data associated with waste other than the matters entered in manifests such as transportation routes of industrial waste because it is significantly dependent upon memory of operators.

Thus, the risk of unrighteous or illegal disposal of industrial waste always exists, and such a system as to allow tracing/managing whether waste is being reliably and safely disposed of or not through a detailed check with real images has not been sufficiently constructed yet. Furthermore, it is difficult to have a clear and real-time understanding of the state of waste disposal that is in a sequential "flow" only by processing a manifest slip.

### Disclosure of the Invention

It is therefore an object of the invention to provide a rational tracing/managing system in which image data of real images in each of the steps of disposal for data associated with waste in each of the steps of sequentially disposing of industrial waste, along with data of a manifest and transportation routes, are always made accessible at a data management unit, thereby allowing an objective and clear judgment on whether said waste is being reliably and safely disposed of or not because of the accessibility to said data as occasion demands.

As means for solving said problem, a system for tracing/managing the state of waste disposal according to a first invention is characterized in that in steps of disposal from collection of waste 1 to final disposal, the waste 1 is imaged with imaging means 2 in each of the steps of disposal; image data 7 of the waste 1 obtained by the imaging means 2 are transferred to data management unit 5 by image transfer means 3; and the data management unit 5 is accessed to trace/manage the state of disposal of the waste 1 based on the image data 7.

A system for tracing/managing the state of waste disposal according to a second invention is characterized in that in steps of disposal from collection of waste 1 to final disposal, data 6 associated with the waste 1 including manifest data, transportation route, current position, time, and analysis of components of the waste 1 in each of the steps of disposal are transferred to a data management unit 5 by record-transfer means 4; and the data management unit 5 is accessed to trace/manage the state of disposal of the waste 1 based on the data 6 associated with the waste 1.

A system for tracing/managing the state of waste disposal according to a third invention is characterized in that in steps of disposal from collection of waste 1 to final disposal, manifest data associated with the waste 1 and data 6 of transportation route, current position, time, and analysis of components, etc. of the waste 1 in each of the steps of disposal are transferred to a data management unit 5 by record-transfer means 4; the waste 1 is imaged with imaging means 2 in each of the steps of disposal; image data 7 of the waste 1 obtained by the imaging means 2 are transferred to the data management unit 5 by image transfer means 3; and the data management unit 5 is accessed to trace/manage the state of disposal of the waste 1 based on the data 6, 7 associated with the waste 1 such as manifest and images.

A system for tracing/managing the state of waste disposal according to a fourth invention is characterized in that the image data 7 of the waste 1 are processed with moving images.

A system for tracing/managing the state of waste disposal according to a fifth invention is characterized in that the data 6, 7 associated with the waste 1 such as images are transferred to the data management unit 5 by record-transfer means 4 as occasion demands to store the latest data.

A system for tracing/managing the state of waste disposal according to a sixth invention is characterized in that the data 6, 7 associated with the waste 1 such as images are obtained by accessing the data management unit 5 with access means 14 to trace/manage the disposal state of the waste 1.

A system for tracing/managing the state of waste disposal according to a seventh invention is characterized in that identification is performed with a manifest number when the data management unit 5 is accessed for the data 6, 7 associated with the waste 1 such as images.

### Brief Description of the Drawing

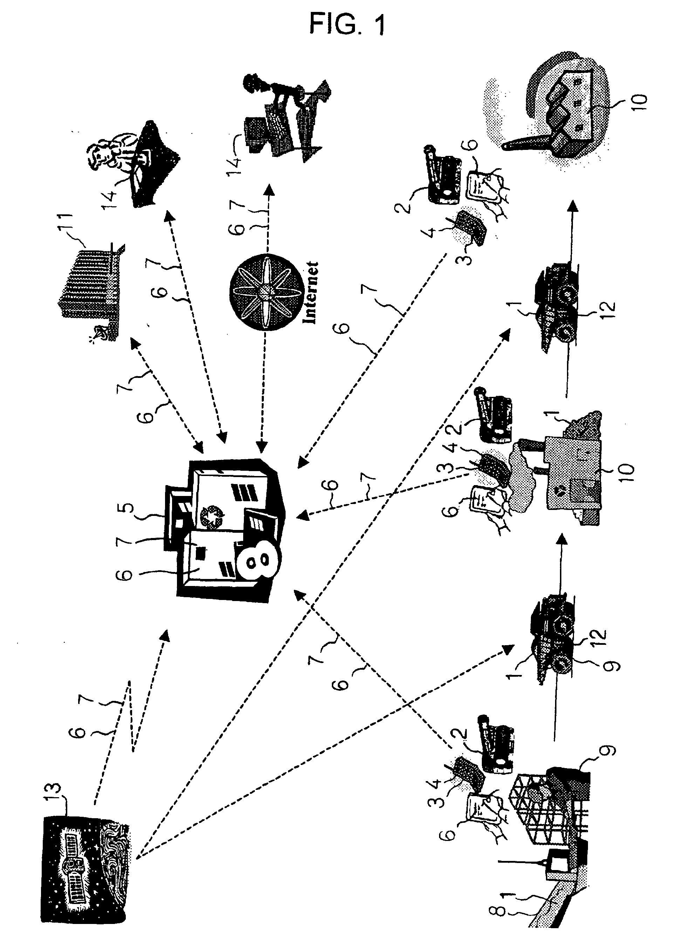

Fig. 1 is a schematic view showing a system for tracing/managing the state of waste disposal.

### Best Mode for Carrying Out the Invention

As shown in Fig. 1 as a schema of the present system, the first through seventh inventions are systems for tracing/managing whether waste is reliably disposed of or not as occasion demands in each of steps of disposal such as collection of waste (in particular, industrial waste) discharged by a discharging company, followed by transportation, sorting, storage, transportation, intermediate treatment, transportation, and then final disposal in the following embodiments utilizing moving image data of real images and the like.

In the drawing, reference numerals 8, 9, 10, 11, and 12 respectively represent a discharging company, a collection/transportation company, a company dealing with intermediate-treatment/final-disposal, a manifest monitoring center, and a vehicle for collecting/transporting waste 1. The steps of sorting and storing industrial waste are omitted in the drawing.

A mode for carrying out the first invention will be described.

In this mode, in steps of disposal from the collection of said waste 1 to the final disposal, said waste 1 is imaged by an operator with imaging means 2 in each of the steps of disposal, that is, each time collection, storage, transportation, disposal, or the like is performed; image data 7 of the waste 1 obtained by said imaging means 2 are transferred to a data management unit 5 by image transfer means 3; and the data management unit 5 manages the image data to be accessible.

In this mode, both or either of moving images and still images are used as the image data 7 of the waste 1. A portable digital video camera, a digital camera, a notebook PC with a camera, a portable video phone, or the like is preferable as the imaging means 2 mentioned here. While the image transfer means 3 may be means including a portable telephone, a modem, a satellite 13, or the like as one constituent element, a notebook PC, or the like, it is included in record-transfer means 4 in a broader sense, which will be described later. The data management unit 5 mentioned here has a broad meaning including computer systems (host computers, servers, applications, and so on).

Therefore, the discharging company 8, the collection/transportation company 9, the company 10 dealing with intermediate-treatment/final-disposal, and a member or the like of the manifest monitoring center 11 can access the data management unit 5 with the access means 14 such as the Internet, and the state of disposal of the waste 1 can be traced with the image data 7 of the waste 1 thus read at a glance, and the waste 1 can be managed reliably.

A mode for carrying out the second invention will be described.

In this mode, in steps of disposal from the collection of the waste 1 to final disposal, manifest data associated with said waste 1 in each of the steps of disposal are transferred to the data management unit 5 by the record-transfer means 4. In addition, various data 6 associated with the waste 1 such as transportation route traveled by the collecting and transporting vehicle 12 loaded with said waste 1, the current position of said collecting and transporting vehicle 12, the time of each operation, and results of component analysis on the waste 1 are transferred to the data management unit 5 by the record-transfer means 4 and are managed by the data management unit 5 to be accessible.

Items transferred as said manifest data 6 are data such as the type, quantity, weight, shape, type of packing, and the results of component analysis of the waste 1 and the locations, names, and people in charge of the discharging company 8, the collection/transportation company 9, and the company 10 dealing with intermediate-treatment/final-disposal. In this mode, it is preferable that the manifest data 6 may be transferred to the data management unit 5 by the record-transfer means 4 with the signatures of people in charge by using personal digital assistants. Portable telephones capable of transferring text data, electronic notebooks having communication functions, notebook PC's, and the like are preferably used as the record-transfer means 4.

In this mode, it is preferable that the data 6 associated with transportation route and the current position of the vehicle 12 for collecting and transporting the waste 1 may be transferred to the data management unit 5 by a GPS (global positioning system) utilizing the satellite 13.

Therefore, the discharging company 8, members or the like of the manifest monitoring center 11 can easily access the data management unit 5 at any time with the simple access means 14 such as the Internet in the same way as described above, and the state of disposal of said waste 1 can be understood in many aspects from the various data 6 associated with said waste 1 thus read, which allows accurate tracing and management.

A mode for carrying out the third invention will be described.

In this mode, in steps of disposal from the collection of the waste 1 to final disposal, data 6 associated with said waste 1 including manifest data, transportation route, current position, time, and analysis of components of said waste 1 in each of the steps of disposal, are transferred to the data management unit 5 by the record-transfer means 4 as described above. In addition to the data 6 of said manifest and so on, said waste 1 is imaged with the imaging means 2 in each of the above steps of disposal, and image data 7 of the waste 1 obtained by said imaging means 2 are transferred to the data management unit 5 by the image transfer means 3 to manage them to be accessible.

Therefore, in this mode, members such as the discharging company 8 and the manifest monitoring center 11 can access the data management unit 5 with the access means 14 such as the Internet to clearly understand the state of disposal of said waste 1 and states that change momentarily such as the transportation route on a comprehensive basis from the various data 6, 7 associated with the waste 1 thus read such as manifest and images, thereby making their management system to be safest.

A mode for carrying out the fourth invention will be described.

In this mode, data processed with moving images are used as the image data 7 of said waste 1. The reason is that the use of data of moving images in such a manner is more reliable in the sense of visual monitoring of the waste 1. Another reason is that a post-treatment of said waste 1 performed by an operator must be judged using moving images.

A mode for carrying out the fifth invention will be described.

In this mode, the data 6, 7 associated with said waste 1 such as images are transferred to the data management unit 5 by the record-transfer means 4 as occasion demands to always store the latest data. This makes it possible to have a real-time understanding of the state of disposal of the waste 1 in each step of disposal. Obviously, the understanding of the flow of the steps of disposal becomes clear because the data 6, 7 for preceding steps are maintained.

A mode for carrying out the sixth invention will be described.

In this mode, the data 6, 7 associated with the waste 1 such as images are read by accessing the data management unit 5 with the access means 14 to trace/manage the state of disposal of the waste 1. Examples of the access means 14 are the Internet, telephones, facsimiles, portable telephones, and so on that utilize a communication network.

Therefore, in this mode, the discharging company 8, the collection/transportation company 9, the company dealing with intermediate-treatment/final-disposal 10 or the manifest monitoring center 11 or the like can read the data 6, 7 associated with the waste 1 such as images by accessing the data management unit 5 with said access means 14 easily from a remote location to have a real-time understanding of the state of disposal of the waste 1.

A mode for carrying out the seventh invention will be described.

In this mode, when the data management unit 5 is accessed for the data 6, 7 associated with said waste 1 such as images, the discharging company 8 or the like is identified by a manifest number that has been assigned thereto in advance, which makes it possible to manage information on the waste 1 to be disposed of smoothly.

### Industrial Applicability

According to the first invention, in steps of disposal from the collection of waste to final disposal, the waste is imaged with the imaging means in each of the steps of disposal; image data of the waste thus obtained are transferred to the data management unit with the image transfer means; the discharging company, the collection/transportation company, the company dealing with intermediate-treatment/final-disposal, the members of the manifest monitoring center, and so on can access the data management unit with the access means at any time and anywhere to trace and manage the state of waste disposal based on a clear and objective understanding of the same from the image data thus read, which provides excellent accuracy and reliability and prevents unrighteous and illegal disposal of the waste to contribute to preservation of environment.

According to the second invention, a member or the like can easily access the data management unit with the access means such as the Internet to have a reliable understanding of the state of waste disposal such as various data associated with the waste including manifest data thus read and states that change momentarily such as transportation route, which makes it possible to achieve rational and economical waste management.

According to the third invention, a member or the like can easily access the data management unit with the access means such as the Internet at any time and anywhere to have a clear understanding of the state of waste disposal in a sequential "flow" from both of manifest data and image data thus read, which contributes to rational disposal and control of waste while maintaining objectivity.

According to the fourth invention, since moving images are used as image data of waste, the process of waste disposal can be more clearly understood at a glance, and a post-treatment of said waste performed by an operator can be easily judged, which makes it possible to achieve a safest waste management system.

According to the fifth invention, the latest data associated with waste such as images are always stored, real-time data of waste disposal can be provided in each step of disposal, which allows accurate waste tracing and management to be achieved.

According to the sixth invention, a member or the like at a remote location can easily access the data management unit with the access means to have a real-time understanding of the state of waste disposal, which is quite convenient and which makes it possible to provide a rational and economical tracing and management system.

According to the seventh invention, when the data management unit is accessed for data associated with waste such as images, the member is identified by a manifest number that has been assigned in advance, which contributes to safest and smooth management of information on the waste.

## Claims

1. A system for tracing/managing the state of waste disposal **characterized in that** in steps of disposal from collection of waste to final disposal, said waste is imaged with imaging means in each of the steps of disposal; image data of the waste obtained by said imaging means are transferred to data management unit by image transfer means; and said data management unit is accessed to trace/manage the state of disposal of the waste based on said image data.

2. The system for tracing/managing the state of waste disposal according to claim 1, **characterized in that** the image data of the waste are processed with moving images.

3. The system for tracing/managing the state of waste disposal according to claim 1, **characterized in that** the image data of the waste are obtained by accessing the data management unit with access means to trace/manage the state of waste disposal.

4. The system for tracing/managing the state of waste disposal according to claim 1 or 2, **characterized in that** the image data of the waste are transferred to the data management unit by record-transfer means as occasion demands to store the latest data.

5. The system for tracing/managing the state of waste disposal according to claim 4, **characterized in that** the image data of the waste are obtained by accessing the data management unit with access means to trace/manage the state of waste disposal.

6. The system for tracing/managing the state of waste disposal according to any of claim 1, 3 or 5, **characterized in that** identification is performed with a manifest number when the data management unit is accessed for the image data of the waste.

7. A system for tracing/managing the state of waste disposal, **characterized in that** in steps of disposal from collection of waste to final disposal, data associated with said waste including manifest data, transportation route, current position, time, and analysis of components of said waste in each of the steps of disposal are transferred to a data management unit by record-transfer means; and said data management unit is accessed to trace/manage the state of disposal of the waste based on the data associated with said waste.

8. The system for tracing/managing the state of waste disposal according to claim 7, **characterized in that** the data associated with the waste are obtained by accessing the data management unit with access means to trace/manage the state of waste disposal.

9. The system for tracing/managing the state of waste disposal according to claim 7, **characterized in that** the data associated with the waste are transferred to the data management unit by record-transfer means as occasion demands to store the latest data.

10. The system for tracing/managing the state of waste disposal according to claim 9, **characterized in that** the data associated with the waste are obtained by accessing the data management unit with access means to trace/manage the state of waste disposal.

11. The system for tracing/managing the state of waste disposal according to any of claim 7, 8 or 10, **characterized in that** identification is performed with a manifest number when the data management unit is accessed for the data associated with the waste.

12. A system for tracing/managing the state of waste disposal, **characterized in that** in steps of disposal from collection of waste to final disposal, manifest data associated with said waste and data of transportation route, current position, time, and analysis of components, etc. of said waste in each of the steps of disposal are transferred to a data management unit by record-transfer means; said waste is imaged with imaging means in each of the steps of disposal; image data of the waste obtained by said imaging means are transferred to the data management unit by image transfer means; and said data management unit is accessed to trace/manage the state of disposal of the waste based on the data associated with said waste such as manifest and images.

13. The system for tracing/managing the state of waste disposal according to claim 12, **characterized in that** the image data of the waste are processed with moving images.

14. The system for tracing/managing the state of waste disposal according to claim 12, **characterized in that** the data associated with the waste and the image data of the waste are obtained by accessing the data management unit with access means to trace/manage the state of waste disposal.

15. The system for tracing/managing the state of waste disposal according to claim 12 or 13, **characterized in that** the data associated with the waste and the image data of the waste are transferred to the data management unit by record-transfer means as occasion demands to store the latest data.

16. The system for tracing/managing the state of waste disposal according to claim 15, **characterized in that** the data associated with the waste and the image data of the waste are obtained by accessing the data management unit with access means to trace/manage the state of waste disposal.

17. The system for tracing/managing the state of waste disposal according to any of claim 12, 14 or 16, **characterized in that** identification is performed with a manifest number when the data management unit is accessed for the data associated with the waste and the image data of the waste.
